# EUROPEAN PATENT APPLICATION

(11) **EP 4 156 040 A1**
(43) Date of publication of application: **29.03.2023**
(21) Application number: 22196792.0
(22) Date of filing: 21.09.2022
(51) Int. Cl.: G06N 20/00

(54) **MACHINE LEARNING MODEL EVALUATION FRAMEWORKS**

(30) Priority: 24.09.2021 US 202163248008 P
(71) Applicant: Nokia Technologies Oy, 02610 Espoo (FI)
(72) Inventor: GUNDOGAN, Alperen, 81541 Munich (DE); KHARE, Saurabh, 560005 Bangalore (IN); JERICHOW, Anja, 85567 Grafing bei München (DE)
(74) Representative: Nokia EPO representatives

(57) **Abstract**

A method, apparatus and computer program product for providing and evaluating machine leaning models are provided. In the context of an apparatus, the apparatus comprises at least one processor; and at least one memory including computer program code, the at least one memory and the computer program code configured to, with the at least one processor, cause the apparatus at least to perform: responsive to receiving a benchmarking data request, identify user equipment capability data associated with the benchmarking data request; identify a machine learning model associated with the benchmarking data request; generate benchmarking data based at least in part on the machine learning model and the user equipment capability data; and provide the benchmarking data for use in conjunction with the machine learning model.

## Description

### TECHNOLOGICAL FIELD

An example embodiment relates generally to techniques for providing benchmarking data for evaluating the performance of machine learning models.

### BACKGROUND

Various devices and terminals (e.g. a smartphone, a smart car, a mobile robot, an Unmanned Arial Vehicle (UAV), or the like) may support machine learning applications and include certain on-board machine learning inference capabilities. However, in some examples, it may not be practical to preload all available machine learning models that a device or terminal may require due to changing requirements, limited storage and limited processing power. Additionally, machine learning models may perform differently on different devices and terminals than they do in a remote or server-based environment.

### BRIEF SUMMARY

A method, apparatus and computer program product for providing and evaluating machine leaning models are provided. In this regard, the method, apparatus and computer program product are configured to provide a machine learning model and/or benchmarking data to a user equipment for execution. The benchmarking data is generated based at least in part on user equipment capability data associated with the user equipment. Utilizing an iterative process, the machine learning model is tuned and/or retrained based at least in part on user equipment machine learning performance data. By providing for improved machine learning optimization operations, the performance of machine learning models can be evaluated and enhanced in an accurate and efficient manner.

In an example embodiment, an apparatus is provided comprising at least one processor and at least one memory including computer program code with the at least one memory and the computer program code configured to, with the at least one processor, cause the apparatus to, responsive to receiving a benchmarking data request, identify user equipment capability data associated with the benchmarking data request. The at least one memory and the computer program code are also configured to, with the at least one processor, cause the apparatus to identify a machine learning model associated with the benchmarking data request. The at least one memory and the computer program code are also configured to, with the at least one processor, cause the apparatus to generate benchmarking data based at least in part on the machine learning model and the user equipment capability data. The at least one memory and the computer program code are also configured to, with the at least one processor, cause the apparatus to provide the benchmarking data for use in conjunction with the machine learning model.

The at least one memory and the computer program code are also configured to, with the at least one processor, cause the apparatus to receive machine learning model performance data; and, in an instance in which the machine learning model performance data fails to satisfy one or more benchmarking data parameters, perform one or more optimization operations with respect to the machine learning model. The at least one memory and the computer program code are also configured to, with the at least one processor, cause the apparatus to provide an updated machine learning model for execution. The at least one memory and the computer program code are also configured to, with the at least one processor, cause the apparatus to retrain the machine learning model based at least in part on training data provided in conjunction with the machine learning model performance data. In this example embodiment, the user equipment capability data is stored by an Application Management Function (AMF) or a Unified Data Management (UDM). In this example embodiment, a Network Data Analytics Function (NWDAF) retrieves the user equipment capability data for selecting or optimizing the machine learning model. In this example embodiment, the user equipment capability data comprises at least one of hardware properties, software properties, sensor information or a target application. In this example embodiment, the machine learning model performance data is generated by at least one user equipment subsequent to executing the machine learning model based at least in part on the benchmarking data. In this example embodiment, the machine learning model performance data is associated with a target function, and the target function comprises at least one of model accuracy data, a model inference time or energy consumption data. In this example embodiment, the machine learning model performance data further comprises a subset of the benchmarking data marked by a user equipment.

In another example embodiment, an apparatus is provided. The apparatus comprises means for, responsive to receiving a benchmarking data request, identifying a machine learning model associated with the benchmarking data request. The apparatus comprises means for identifying user equipment capability data associated with the benchmarking data request. The apparatus comprises means for determining benchmarking data based at least in part on the machine learning model and the user equipment capability data. The apparatus comprises means for providing the benchmarking data for use in conjunction with the machine learning model.

The apparatus comprises means for receiving machine learning model performance data. The apparatus comprises means for, in an instance in which the machine learning model performance data fails to satisfy one or more benchmarking data parameters, performing one or more optimization operations with respect to the machine learning model. The apparatus comprises means for providing an updated machine learning model for execution. In this example embodiment, the one or more optimization operations comprise retraining the machine learning model. The apparatus comprises means for retraining the machine learning model based at least in part on training data provided in conjunction with the machine learning model performance data. In this example embodiment, the machine learning model performance data is generated by at least one user equipment subsequent to executing the machine learning model based at least in part on the benchmarking data. In this example embodiment, the machine learning model performance data is associated with a target function, and the target function comprises at least one of model accuracy data, a model inference time and energy consumption data. In this example embodiment, the machine learning model performance data comprises a subset of the benchmarking data marked by a user equipment. In this example embodiment, the user equipment capability data is stored by an AMF or UDM. In this example embodiment, an NWDAF retrieves the user equipment capability data for selecting or optimizing the machine learning model. In this example embodiment, the user equipment capability data comprises at least one of hardware properties, software properties, sensor information or a target application. In the preceding example embodiments, the means comprises at least one processor; and at least one memory including computer program code, the at least one memory and computer program code configured to, with the at least one processor, cause the performance of the apparatus.

In a further example embodiment, a method is provided. The method comprises responsive to receiving a benchmarking data request, identifying a machine learning model associated with the benchmarking data request. The method also comprises identifying user equipment capability data associated with the benchmarking data request. The method also comprises determining benchmarking data based at least in part on the machine learning model and the user equipment capability data. The method also comprises providing the benchmarking data for use in conjunction with the machine learning model.

The method also comprises receiving machine learning model performance data. The method also comprises, in an instance in which the machine learning model performance data fails to satisfy one or more benchmarking data parameters, performing one or more optimization operations with respect to the machine learning model. The method also comprises providing an updated machine learning model for execution. The method also comprises retraining the machine learning model based at least in part on training data provided in conjunction with the machine learning model performance data. In this example embodiment, the machine learning model performance data comprises a subset of the benchmarking data marked by a user equipment. In this example embodiment, the user equipment capability data comprises at least one of hardware properties, software properties, sensor information or a target application. In this example embodiment, the machine learning model performance data is generated by at least one user equipment subsequent to executing the machine learning model based at least in part on the benchmarking data. In this example embodiment, the machine learning model performance data is associated with a target function, and the target function comprises at least one of model accuracy data, a model inference time or energy consumption data.

In yet another example embodiment, a computer program product is provided. The computer program product comprises at least one computer readable non-transitory memory having program code instructions stored thereon, the program code instructions which when executed by an apparatus cause the apparatus to at least, responsive to receiving a benchmarking data request, identify a machine learning model associated with the benchmarking data request. The computer executable program code instructions also comprise program code instructions configured, upon execution, to identify user equipment capability data associated with the benchmarking data request. The computer executable program code instructions also comprise program code instructions configured, upon execution, to determine benchmarking data based at least in part on the machine learning model and the user equipment capability data. The computer executable program code instructions also comprise program code instructions configured, upon execution, to provide the benchmarking data for use in conjunction with the machine learning model.

The computer executable program code instructions also comprise program code instructions configured, upon execution, to receive machine learning model performance data. The computer executable program code instructions also comprise program code instructions configured, upon execution, to in an instance in which the machine learning model performance data fails to satisfy one or more benchmarking data parameters, perform one or more optimization operations with respect to the machine learning model. The computer executable program code instructions also comprise program code instructions configured, upon execution, to provide an updated machine learning model for execution. The computer executable program code instructions also comprise program code instructions configured, upon execution, to retrain the machine learning model based at least in part on training data provided in conjunction with the machine learning model performance data. In this example embodiment, the user equipment capability data comprises at least one of hardware properties, software properties, sensor information or a target application. In this example embodiment, the machine learning model performance data is generated by at least one user equipment subsequent to executing the machine learning model based at least in part on the benchmarking data. In this example embodiment, the machine learning model performance data is associated with a target function, and the target function comprises at least one of model accuracy data, a model inference time or energy consumption data. In this example embodiment, the machine learning model performance data comprises a subset of the benchmarking data marked by a user equipment.

In another example embodiment, an apparatus is provided, comprising at least one processor, and at least one memory including computer program code. The at least one memory and the computer program code configured to, with the at least one processor, cause the apparatus at least to cause transmission, via a non-access stratum (NAS) signal, of a benchmarking data request comprising user equipment capability data. The at least one memory and the computer program code configured to, with the at least one processor, cause the apparatus at least to receive benchmarking data for use in conjunction with a machine learning model. The at least one memory and the computer program code configured to, with the at least one processor, cause the apparatus at least to execute the machine learning model based at least in part on the benchmarking data. The at least one memory and the computer program code configured to, with the at least one processor, cause the apparatus at least to generate machine learning model performance data. The at least one memory and the computer program code configured to, with the at least one processor, cause the apparatus at least to provide a report of the machine learning model performance data.

The at least one memory and the computer program code configured to, with the at least one processor, cause the apparatus at least to receive the machine learning model in conjunction with the benchmarking data. In this example embodiment, the machine learning model is provided by a network node comprising one or more of a NWDAF, a Management Data Analytics Service (MDAS) or other network function. The at least one memory and the computer program code configured to, with the at least one processor, cause the apparatus at least to receive an updated machine learning model for execution. In this example embodiment, the updated machine learning model is updated based at least in part on the machine learning model performance data. In this example embodiment, the user equipment capability data comprises at least one of hardware properties, software properties, sensor information or a target application. In this example embodiment, the machine learning model performance data is associated with a target function, and the target function comprises at least one of model accuracy data, a model inference time or energy consumption data. The at least one memory and the computer program code configured to, with the at least one processor, cause the apparatus at least to mark a subset of the benchmarking data for sending in conjunction with the report.

In yet another example embodiment, a method is provided. The method comprises causing transmission, via a non-access stratum (NAS) signal, of a benchmarking data request comprising user equipment capability data. The method comprises receiving benchmarking data for use in conjunction with a machine learning model. The method comprises executing the machine learning model based at least in part on the benchmarking data. The method comprising generating machine learning model performance data. The method comprises providing a report of the machine learning model performance data.

The method comprises receiving the machine learning model in conjunction with the benchmarking data. In this example embodiment, the machine learning model is provided by a network node comprising one or more of a NWDAF, a Management Data Analytics Service (MDAS) or other network function. The method comprises receiving an updated machine learning model for execution. In this example embodiment, the updated machine learning model is updated based at least in part on the machine learning model performance data. In this example embodiment, the user equipment capability data comprises at least one of hardware properties, software properties, sensor information or a target application. In this example embodiment, the machine learning model performance data is associated with a target function, and the target function comprises at least one of model accuracy data, a model inference time or energy consumption data. The method comprises marking a subset of the benchmarking data for sending in conjunction with the report.

In another example embodiment, an apparatus is provided. The apparatus comprises means for causing transmission, via a non-access stratum (NAS) signal, of a benchmarking data request comprising user equipment capability data. The apparatus comprises means for receiving benchmarking data for use in conjunction with a machine learning model. The apparatus comprises means for executing the machine learning model based at least in part on the benchmarking data. The apparatus comprises means for generating machine learning model performance data. The apparatus comprises means for providing a report of the machine learning model performance data.

The apparatus comprises means for receiving the machine learning model in conjunction with the benchmarking data. In this example embodiment, the machine learning model is provided by a network node comprising one or more of a NWDAF, a Management Data Analytics Service (MDAS) or other network function. The apparatus comprises means for receiving an updated machine learning model for execution. In this example embodiment, the updated machine learning model is updated based at least in part on the machine learning model performance data. In this example embodiment, the user equipment capability data comprises at least one of hardware properties, software properties, sensor information or a target application. In this example embodiment, the machine learning model performance data is associated with a target function, and the target function comprises at least one of model accuracy data, a model inference time or energy consumption data. The apparatus comprises means for marking a subset of the benchmarking data for sending in conjunction with the report.

In another example embodiment, a computer program product is provided. The computer program product comprises at least one computer readable non-transitory memory having program code instructions stored thereon, the program code instructions which when executed by an apparatus cause the apparatus to at least cause transmission, via a non-access stratum (NAS) signal, of a benchmarking data request comprising user equipment capability data. The computer executable program code instructions also comprise program code instructions configured, upon execution, to receive benchmarking data for use in conjunction with a machine learning model. The computer executable program code instructions also comprise program code instructions configured, upon execution, to execute the machine learning model based at least in part on the benchmarking data. The computer executable program code instructions also comprise program code instructions configured, upon execution, to generate machine learning model performance data. The computer executable program code instructions also comprise program code instructions configured, upon execution, to provide a report of the machine learning model performance data.

The computer executable program code instructions also comprise program code instructions configured, upon execution, to receive the machine learning model in conjunction with the benchmarking data. In this example embodiment, the machine learning model is provided by a network node comprising one or more of a NWDAF, a Management Data Analytics Service (MDAS) or other network function. The computer executable program code instructions also comprise program code instructions configured, upon execution, to receive an updated machine learning model for execution. In this example embodiment, the updated machine learning model is updated based at least in part on the machine learning model performance data. In this example embodiment, the user equipment capability data comprises at least one of hardware properties, software properties, sensor information or a target application. In this example embodiment, the machine learning model performance data is associated with a target function, and the target function comprises at least one of model accuracy data, a model inference time or energy consumption data. The computer executable program code instructions also comprise program code instructions configured, upon execution, to mark a subset of the benchmarking data for sending in conjunction with the report.

### BRIEF DESCRIPTION OF THE DRAWINGS

Having thus described certain example embodiments of the present disclosure in general terms, reference will hereinafter be made to the accompanying drawings, which are not necessarily drawn to scale, and wherein:
FIG. 1 is an overview of a system that can be used to practice an example embodiment of the present disclosure;
FIG. 2A and FIG. 2B are an example block diagrams of devices that may be specifically configured in accordance with example embodiments of the present disclosure;
FIG. 3 illustrates an example sequence diagram illustrating operations performed in accordance with an example embodiment of the present disclosure;
FIG. 4 illustrates a flowchart illustrating operations in accordance with an example embodiment of the present disclosure; and
FIG. 5 illustrates another flowchart illustrating operations in accordance with an example embodiment of the present disclosure.

### DETAILED DESCRIPTION

Some embodiments of the present disclosure will now be described more fully hereinafter with reference to the accompanying drawings, in which some, but not all, embodiments of the invention are shown. Indeed, various embodiments of the invention may be embodied in many different forms and should not be construed as limited to the embodiments set forth herein; rather, these embodiments are provided so that this disclosure will satisfy applicable legal requirements. Like reference numerals refer to like elements throughout. As used herein, the terms "data," "content," "information," and similar terms may be used interchangeably to refer to data capable of being transmitted, received and/or stored in accordance with embodiments of the present disclosure. Thus, use of any such terms should not be taken to limit the spirit and scope of embodiments of the present disclosure.

Additionally, as used herein, the term 'circuitry' refers to (a) hardware-only circuit implementations (e.g., implementations in analog circuitry and/or digital circuitry); (b) combinations of circuits and computer program product(s) comprising software and/or firmware instructions stored on one or more computer readable memories that work together to cause an apparatus to perform one or more functions described herein; and (c) circuits, such as, for example, a microprocessor(s) or a portion of a microprocessor(s), that require software or firmware for operation even if the software or firmware is not physically present. This definition of 'circuitry' applies to all uses of this term herein, including in any claims. As a further example, as used herein, the term 'circuitry' also includes an implementation comprising one or more processors and/or portion(s) thereof and accompanying software and/or firmware. As another example, the term 'circuitry' as used herein also includes, for example, a baseband integrated circuit or applications processor integrated circuit for a mobile phone or a similar integrated circuit in a server, a cellular network device, other network device (such as a core network apparatus), field programmable gate array, and/or other computing device.

This definition of 'circuitry' applies to all uses of this term herein, including in any claims. As a further example, as used herein, the term 'circuitry' also includes an implementation comprising one or more processors and/or portion(s) thereof and accompanying software and/or firmware. The term "circuitry" would also cover, for example and if applicable to the particular claim element, a baseband integrated circuit or application specific integrated circuit for a mobile phone or a similar integrated circuit in a server, a cellular network device, or other network device. As defined herein, a "computer-readable storage medium," which refers to a physical storage medium (e.g., volatile or non-volatile memory device), may be differentiated from a "computer-readable transmission medium," which refers to an electromagnetic signal.

Systems, methods, computer program products and apparatuses are therefore provided for generating and providing benchmarking data for use in conjunction with a machine learning model in order to evaluate performance of the machine learning model when executed by a user equipment (UE).

The term "benchmarking data" can refer to data that is utilized for evaluation of a machine learning model and/or to compare performance of a particular machine learning model to other machine learning models. In some examples, benchmarking data may comprise one or more sample datasets. As such, a benchmarking evaluation may comprise determining or confirming whether a machine learning model performs as expected when executed on a particular UE. In some examples, benchmarking data can be determined based at least in part on UE capabilities (e.g., hardware capabilities, software capabilities and the like) and a target application. In various examples, the target application may refer to an intended or prospective task to be performed using a machine learning model and parameters associated therewith (e.g., image analysis).

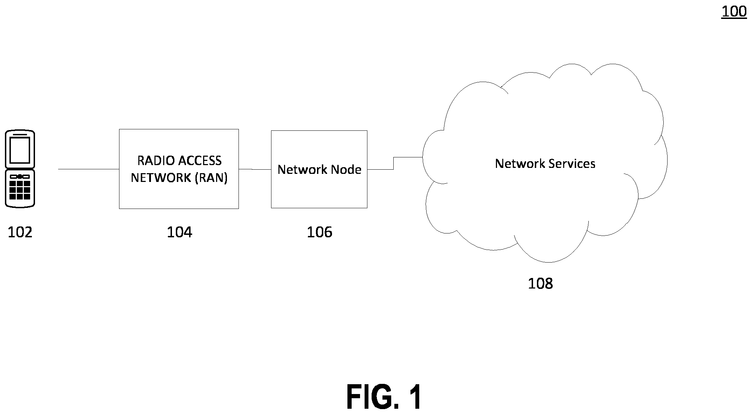

Although the system, method, computer program product, and apparatus may be implemented in a variety of different systems, one example of such a system is shown in FIG. 1. FIG. 1 is a networked system 100 in accordance with an example embodiment of the present disclosure. FIG. 1 specifically illustrates User Equipment (UE) 102 (e.g., mobile terminal), which may be in communication with a Radio Access Network (RAN) 104 in order to access a network node 106. The network node 106 may, in turn, be in communication with network services 108. In some example embodiments, network node 106 may, for example, be embodied as various network functions including, for example, a Network Data Analytics Function (NWDAF), Network Function (NF), Application Function (AF), Unified Data Depository (UDR), Operation and Management (OAM), combinations thereof, and/or the like. The network node 106 can be configured to process one or more data sources in order to generate a data analytics output. While the system may be implemented in Fifth Generation (5G) wireless networks that include one or more RANs, other networks may support the system, method, computer program product, and apparatus of some embodiments of the present disclosure.

In example embodiments, the UE 102 may be a robot, a computing device, a mobile communication device such as, for example, a personal digital assistant (PDA), wireless telephone, mobile computing device, camera, video recorder, audio/video player, positioning device, game device, television device, radio device, or various other like devices or combinations thereof. Furthermore, the UE 102 may communicate in accordance with, for example, radio frequency (RF), Bluetooth (BT), Infrared (IR) or any of a number of different wireline or wireless communication techniques, including LAN, wireless LAN (WLAN), Worldwide Interoperability for Microwave Access (WiMAX), Wi-Fi, ultra-wide band (UWB), Wibree techniques and/or the like. As such, the UE 102 may be enabled to communicate with a network and/or with other terminals by any of numerous different access mechanisms. For example, mobile access mechanisms such as wideband code division multiple access (W-CDMA), CDMA2000, global system for mobile communications (GSM), general packet radio service (GPRS) and/or the like may be supported as well as wireless access mechanisms such as WLAN, WiMAX, and/or the like and fixed access mechanisms such as digital subscriber line (DSL), cable modems, Ethernet and/or the like.

In some embodiments, the network node 106 stores and trains machine learning models utilizing various network services 108 and resources. Subsequently, the trained machine learning model (e.g., an image recognition machine learning model) may be provided to a UE 102 so that the UE 102 can perform inferences independently of the network 108. In some examples, the performance parameters (e.g., inference time and model accuracy) of the trained machine learning model when executed by the UE 102 may differ from what is observed when the same machine learning model is executed and/or tested by the network. By way of example, the inference time and model accuracy of a given machine learning model executed by a UE 102 may differ due to hardware and software properties and high performance computing (HPC) of the UE 102 (e.g., whether implemented using central processing unit (CPU) parallelization or graphics processing unit (GPU) acceleration techniques. By way of example, performance of a trained image recognition machine learning model executed by a UE 102 may be affected by input features (e.g., camera resolution) and environmental conditions (e.g., image quality including lighting conditions).

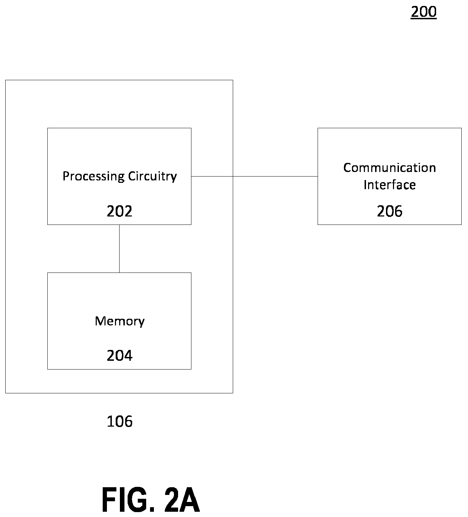

Turning now to FIG. 2A, an example of a network node apparatus 200 (including network node 106) may be embodied as a core network apparatus as configured in accordance with an example embodiment of the present disclosure. As described below, the network node 106 of an example embodiment may be configured to perform the functions described herein. In any instance, the network node 106 may more generally be embodied by a computing device, such as a server, a personal computer, a computer workstation or other type of computing device including those functioning as a UE and/or a wireless local area network. Regardless of the manner in which the network node 106 is embodied, the apparatus of an example embodiment may be configured as shown in FIG. 2A so as to include, be associated with or otherwise be in communication with processing circuitry 202 and a memory 204 and, in some embodiments, and/or a communication interface 206.

As depicted in FIG. 2A, the processing circuitry 212, (the processor and/or coprocessors or any other circuitry assisting or otherwise associated therewith) may be in communication with the memory device 204 via a bus for passing information among components of the network node 106. The memory device may include, for example, one or more volatile and/or non-volatile memories. In other words, for example, the memory device may be an electronic storage device (e.g., a computer readable storage medium) comprising gates configured to store data (e.g., bits) that may be retrievable by a machine (e.g., a computing device like the processor). The memory device may be configured to store information, data, content, applications, instructions, or the like for enabling the apparatus to carry out various functions in accordance with an example embodiment of the present disclosure. For example, the memory device could be configured to buffer input data for processing by the processor. Additionally or alternatively, the memory device could be configured to store instructions for execution by the processor.

The network node 106 may, in some embodiments, be embodied in various computing devices as described above. However, in some embodiments, the apparatus may be embodied as a chip or chip set. In other words, the apparatus may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus may therefore, in some cases, be configured to implement an embodiment of the present disclosure on a single chip or as a single "system on a chip." As such, in some cases, a chip or chipset may constitute means for performing one or more operations for providing the functionalities described herein.

The processing circuitry 202 may be embodied in a number of different ways. For example, the processor may be embodied as one or more of various hardware processing means such as a coprocessor, a microprocessor, a controller, a digital signal processor (DSP), a processing element with or without an accompanying DSP, or various other circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processor may include one or more processing cores configured to perform independently. A multi-core processor may enable multiprocessing within a single physical package. Additionally or alternatively, the processor may include one or more processors configured in tandem via the bus to enable independent execution of instructions, pipelining and/or multithreading.

In an example embodiment, the processing circuitry 202 may be configured to execute instructions stored in the memory device 204 or otherwise accessible to the processor. Alternatively or additionally, the processor may be configured to execute hard coded functionality. As such, whether configured by hardware or software methods, or by a combination thereof, the process or may represent an entity (e.g., physically embodied in circuitry) capable of performing operations according to an embodiment of the present disclosure while configured accordingly. Thus, for example, when the processor is embodied as an ASIC, FPGA or the like, the processor may be specifically configured hardware for conducting the operations described herein. Alternatively, as another example, when the processing circuitry 202 is embodied as an executor of instructions, the instructions may specifically configure the processor to perform the algorithms and/or operations described herein when the instructions are executed. However, in some cases, the processor may be a processor of a specific device (e.g., an encoder and/or a decoder) configured to employ an embodiment of the present disclosure by further configuration of the processor by instructions for performing the algorithms and/or operations described herein. The processor may include, among other things, a clock, an arithmetic logic unit (ALU) and logic gates configured to support operation of the processor.

In embodiments that include a communication interface 206, the communication interface may be any means such as a device or circuitry embodied in either hardware or a combination of hardware and software that is configured to receive and/or transmit data from/to a network and/or any other device or module in communication with the network node 106, such as UE 102, core network services, a database or other storage device, etc. In this regard, the communication interface may include, for example, an antenna (or multiple antennas) and supporting hardware and/or software for enabling communications with a wireless communication network. Additionally or alternatively, the communication interface may include the circuitry for interacting with the antenna(s) to cause transmission of signals via the antenna(s) or to handle receipt of signals received via the antenna(s). In some environments, the communication interface may alternatively or also support wired communication. As such, for example, the communication interface may include a communication modem and/or other hardware/software for supporting communication via cable, digital subscriber line (DSL), universal serial bus (USB) or other mechanisms.

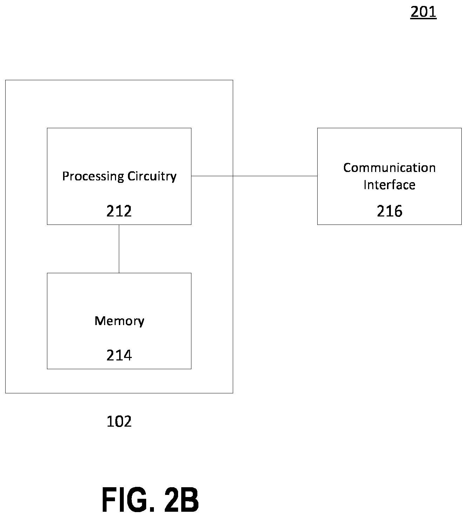

One example of a UE 102 that may be configured as an apparatus 201 is depicted in FIG. 2B. As shown in FIG. 2B, the apparatus 201 includes, is associated with or is in communication with processing circuity 212, a memory 214 and a communication interface 216. The processing circuitry 212 may be in communication with the memory device via a bus for passing information among components of the apparatus. The memory device may be non-transitory and may include, for example, one or more volatile and/or non-volatile memories. In other words, for example, the memory device may be an electronic storage device (e.g., a computer readable storage medium) comprising gates configured to store data (e.g., bits) that may be retrievable by a machine (e.g., a computing device like the processing circuitry). The memory device may be configured to store information, data, content, applications, instructions, or the like for enabling the apparatus to carry out various functions in accordance with an example embodiment of the present disclosure. For example, the memory device could be configured to buffer input data for processing by the processing circuitry. Additionally or alternatively, the memory device could be configured to store instructions for execution by the processing circuitry.

The apparatus 201 may, in some embodiments, be embodied in various computing devices as described above. However, in some embodiments, the apparatus 201 may be embodied as a chip or chip set. In other words, the apparatus may comprise one or more physical packages (e.g., chips) including materials, components and/or wires on a structural assembly (e.g., a baseboard). The structural assembly may provide physical strength, conservation of size, and/or limitation of electrical interaction for component circuitry included thereon. The apparatus may therefore, in some cases, be configured to implement an embodiment of the present invention on a single chip or as a single "system on a chip." As such, in some cases, a chip or chipset may constitute means for performing one or more operations for providing the functionalities described herein.

The processing circuitry 212 may be embodied in a number of different ways. For example, the processing circuitry may be embodied as one or more of various hardware processing means such as a coprocessor, a microprocessor, a controller, a digital signal processor (DSP), a processing element with or without an accompanying DSP, or various other circuitry including integrated circuits such as, for example, an ASIC (application specific integrated circuit), an FPGA (field programmable gate array), a microcontroller unit (MCU), a hardware accelerator, a special-purpose computer chip, or the like. As such, in some embodiments, the processing circuitry may include one or more processing cores configured to perform independently. A multi-core processing circuitry may enable multiprocessing within a single physical package. Additionally or alternatively, the processing circuitry may include one or more processors configured in tandem via the bus to enable independent execution of instructions, pipelining and/or multithreading.

In an example embodiment, the processing circuitry 212 may be configured to execute instructions stored in the memory 214 or otherwise accessible to the processing circuitry. Alternatively or additionally, the processing circuitry may be configured to execute hard coded functionality. As such, whether configured by hardware or software methods, or by a combination thereof, the processing circuitry may represent an entity (e.g., physically embodied in circuitry) capable of performing operations according to an embodiment of the present disclosure while configured accordingly. Thus, for example, when the processing circuitry is embodied as an ASIC, FPGA or the like, the processing circuitry may be specifically configured hardware for conducting the operations described herein. Alternatively, as another example, when the processing circuitry is embodied as an executor of instructions, the instructions may specifically configure the processor to perform the algorithms and/or operations described herein when the instructions are executed. However, in some cases, the processing circuitry may be a processor of a specific device (e.g., an image or video processing system) configured to employ an embodiment of the present invention by further configuration of the processing circuitry by instructions for performing the algorithms and/or operations described herein. The processing circuitry may include, among other things, a clock, an arithmetic logic unit (ALU) and logic gates configured to support operation of the processing circuitry.

The communication interface 216 may be any means such as a device or circuitry embodied in either hardware or a combination of hardware and software that is configured to receive and/or transmit data, including media content in the form of video or image files, one or more audio tracks or the like. In this regard, the communication interface may include, for example, an antenna (or multiple antennas) and supporting hardware and/or software for enabling communications with a wireless communication network. Additionally or alternatively, the communication interface may include the circuitry for interacting with the antenna(s) to cause transmission of signals via the antenna(s) or to handle receipt of signals received via the antenna(s). In some environments, the communication interface may alternatively or also support wired communication. As such, for example, the communication interface may include a communication modem and/or other hardware/software for supporting communication via cable, digital subscriber line (DSL), universal serial bus (USB) or other mechanisms.

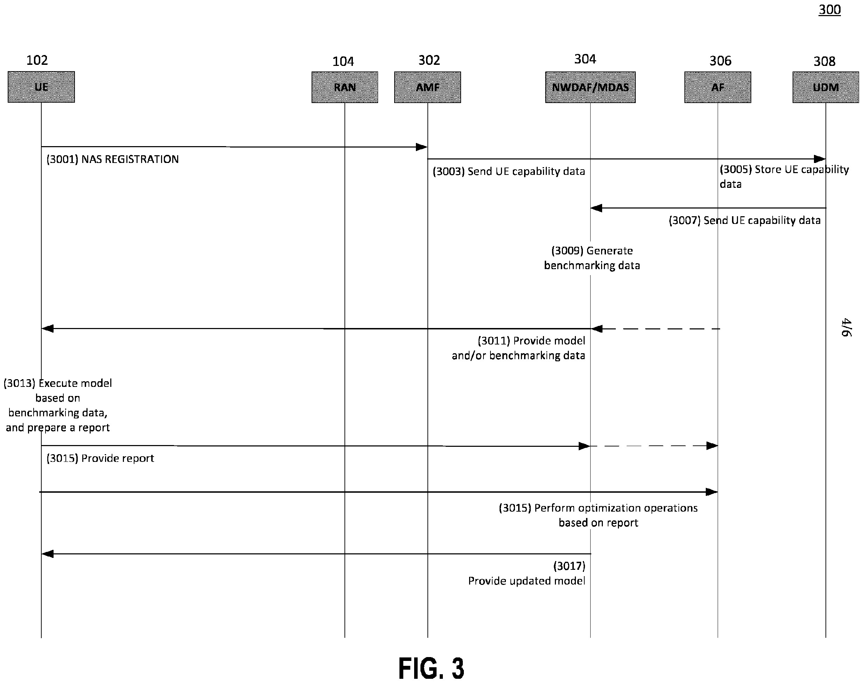

Referring now to FIG. 3, operations 300 that can be performed, such as by UE 102, RAN 104, network node 106/network services 108, to provide a machine learning model and/or benchmarking data to the UE 102 are depicted.

As shown in FIG. 3, at 3001, UE 102 sends a benchmarking data request to the network via a non-access stratum (NAS) or any other NAS signaling. The benchmarking data request includes UE capability data associated with the UE 102. At 3003, an Application Management Function (AMF) 302 stores the UE capability data in local context. At 3005, the AMF sends the UE capability data toa Unified Data Management (UDM) 308 so that the UDM also stores the UE capability data as part of the AMF registration data. By way of example, the UE capability data can contain UE hardware details and resource limits (e.g., CPU and memory information). In some examples, the UE capability data includes sensor information (e.g., a camera count and/or camera angle information).

Subsequently, at 3007, in an instance in which the UE 102 requests a machine learning model or in an instance in which the network node 106 is to provide a machine learning model to the UE 102, NWDAF/ Management Data Analytics Service (MDAS) 304 (or any network function that can provide the machine learning model) retrieves the UE capability data from the UDM 308. In some embodiments, the AMF 302 can provide the UE capability data to the NWDAF/MDAS 304. Subsequent to receiving the UE capability data, at 3009, the NWDAF/MDAS 304 selects and/or tunes a machine learning model and benchmarking data associated therewith based at least in part on the UE capability data. For example, a size of the benchmarking data should align with the UE hardware capabilities (e.g. memory and CPU/GPU).

Additionally, the target application/function of the machine learning model and sensor capabilities of the UE 102 are also considered when generating/tuning the benchmarking data. For example, if the machine learning model will be used for a robotic grasping task, UE sensor information (e.g. number of cameras, camera angles, and/or the like) is considered for the selection of benchmarking data.

Next, at 3011, the NWDAF/MDAS 304 sends the machine learning model and/or selected benchmarking data to the UE 102. In various embodiments, the machine learning model can be sent directly from NWDAF/MDAS 304 to the UE 102 or via the AF 306 using User Plane Function (UPF).

Subsequent to receiving the machine learning model and/or benchmarking data, at 3013, the UE 102 runs the benchmarking data on the machine learning model (e.g., executes the machine learning model) and generates machine learning model performance data and/or a benchmarking report. In some embodiments, the benchmarking data comprises a sample dataset (e.g., images) that the UE 102 utilizes as input to the machine learning model and generates an output associated therewith. In some embodiments, the machine learning model performance data is associated with a target function. For example, the target function may include a machine learning model training speed (e.g., a number of samples per second that a platform can process during training), data capacity (e.g., the largest dataset that the machine learning model is capable of processing), inference time (e.g., a time period associated with determining a predictive output by the machine learning model as a function of the inputs provided, such as, in some examples, a number of samples per second) and model accuracy. In some embodiments, subsequent to generating all the outputs for the sample dataset, the UE 102 prepares a report of machine learning model performance data. The benchmarking report may include details with regard to model accuracy, model inference time, energy consumption of the machine learning model and/or the like. The benchmarking report may mark/indicate a particular subset benchmarking data/the sample dataset (e.g., image data) that did not perform well at the UE 102. Additionally, in some embodiments, the benchmarking report may include UE 102 environmental conditions data and/or images that depict the environmental conditions. In some embodiments, the UE 102 may not want provide environment conditions data due to privacy concerns. In such examples, the UE 102 can mark the sub-data among the benchmarking data that contains similar environment conditions of the task to guide the network for model/benchmarking data enhancements. At 3015, the UE 102 then sends the report directly to the NWDAF/MDAS 304 or via the UPF.

Subsequent to receiving the report, at 3015, the NWDAF/MDAS 304 performs one or more optimization operations based at least in part on the report. Additionally and/or alternatively, the NWDAF/MDAS 304 makes a determination regarding whether or not to provide a different machine learning model. For example, the NWDAF/MDAS 304 may decide, based at least in part on the benchmarking report, whether to provide a new machine learning model. By way of example, the NWDAF/MDAS 304 may determine that the machine learning model accuracy is better than the service requirements but the inference time duration is higher. Accordingly, in the above example, the NWDAF/MDAS 304 may provide a less complex model to reduce the inference time duration. In another example, if the accuracy of the machine learning model is lower than the service requirements, the NWDAF/MDAS 304 can send a more complex model to satisfy the service requirements. In some embodiments, the NWDAF/MDAS 304 tunes and/or retrains the machine learning model based at least on the benchmarking report provided by the UE 102. In some examples, the NWDAF/MDAS 304 generates new benchmarking data by exploiting sub-data marked by UE 102. In various embodiments, the NWDAF/MDAS 304 selects benchmarking data that best matches the environmental conditions of the UE 102 for reliable performance metric evaluation (e.g., model accuracy, inference time and/or the like).

At 3017, the NWDAF/MDAS 304 can then send the enhanced/updated machine learning model and enhanced/updated benchmarking data to the UE 102. The UE 102 reruns the machine learning model with the updated benchmarking data and prepares another report. It should be understood that the NWDAF/MDAS 303 and the UE 102 can thus engage in an iterative process to improve (e.g., tune, update, enhance and/or the like) the machine learning model.

In some embodiments, the UE 102 can send periodic and/or an event triggered benchmarking reports to the network such the network can track the performance enhancements at the UE 102. In some embodiments, a triggering event for sending a benchmarking report may be associated with variations in model performance at the UE 102. For instance, the UE 102 may be triggered to provide a benchmarking report if the model accuracy improves by a predetermined threshold amount after the retraining of the machine learning model at the UE 102. In some examples, the threshold can be set by the network.

In another example, in an instance in which the performance of the fine-tuned machine learning model at a first example UE is better than the performance of the fine-tuned machine learning model at a second example UE, the network may send a request to the first example UE in order to receive the fine-tuned/retrained machine learning model and share the fine-tuned/retrained machine learning model with the second example UE.

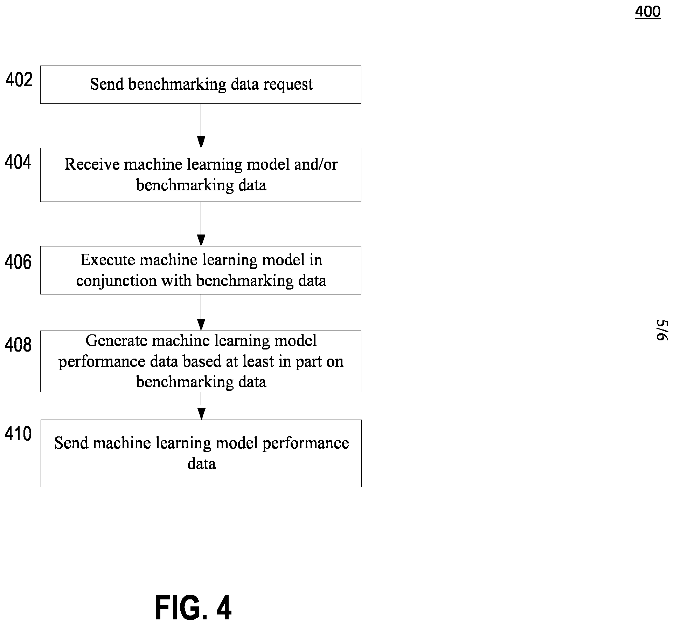

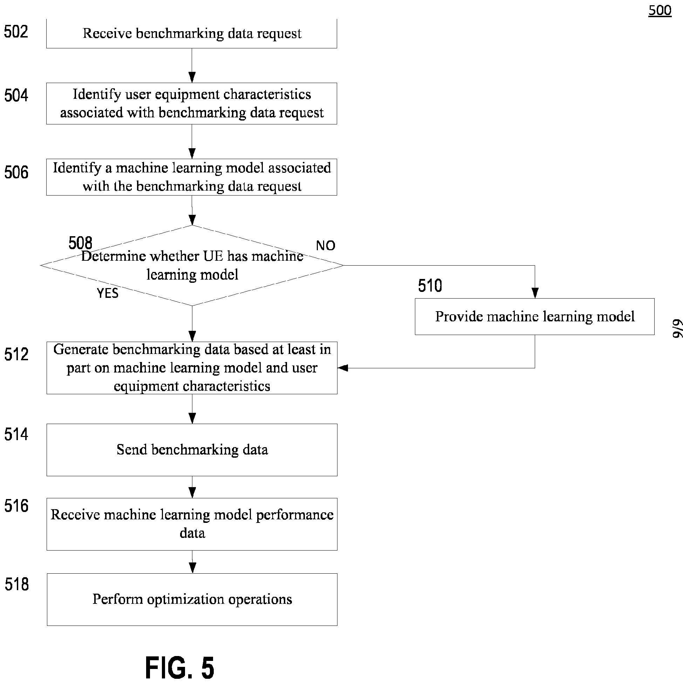

Referring now to FIG. 4 and FIG. 5, operations 400 and 500 performed in order to provide benchmarking data to a UE 102 for use in conjunction with a machine learning model by a network node 106 are depicted.

Beginning at block 402 of FIG. 4, the UE 102 includes means, such as processing circuitry 212, a communication interface 216 or the like for sending (e.g., providing, transmitting) a benchmarking data request, e.g., to the network node 106. In some embodiments, the benchmarking data request may comprise a request for benchmarking data that is associated with a particular machine learning model, target application (e.g., image analysis), and/or UE 102. In some embodiments, the target application may be sent separately from or in conjunction with the benchmarking data request.

Referring now to FIG. 5, as shown in block 502, the network node 106 includes means, such as the processing circuitry 202, the communication interface 206 or the like, for receiving the benchmarking data request, e.g., from the UE 102.

As depicted in FIG. 5, subsequent to receiving the benchmarking data request at block 502, the network node 106 includes means, such as the processing circuitry 202, the communication interface 206 or the like for identifying one or more user equipment capability data (e.g., one or more user equipment characteristics) associated with the benchmarking data request and/or UE 102 associated therewith. In some embodiments, the user equipment capability data may comprise one or more of hardware properties (e.g., storage and processing specifications) and/or software properties associated with the UE 102, sensor information (e.g., sensor type, a sensor count, sensor specifications). By way of example, user equipment capability data may comprise camera specifications including camera resolution, camera count, camera angle(s) and/or the like. In some embodiments, the network node 106 may determine/request the user equipment capability data from the UE 102, another computing entity or the like.

As shown in block 506 of FIG. 5, the network node 106 includes means, such as the processing circuitry 202, the communication interface 206 or the like, for identifying a machine learning model associated with the benchmarking data request. In some embodiments, the network node 106 identifies the machine learning model based on a target application provided in conjunction with or determined from the benchmarking data request. Additionally, the machine learning model can be determined based at least in part on the user equipment capability data.

At block 508, the network node 106 includes means, such as the processing circuitry 202, the communication interface 206 or the like for determining whether the UE 102 has a required machine learning model (e.g., a machine learning model determined to be associated with or required in order to satisfy a target application identified in the benchmarking data request). In some examples, the UE 102 provides an indication regarding whether or not it already has the machine learning model or whether it requires the machine learning model. In some examples, the network node 106 can send a request to the UE 102 requesting information regarding which preloaded machine learning models are available for execution.

At block 510, in an instance in which the network node 106 determines that the UE 102 does not have the required machine learning model, the network node 106 includes means, such as the processing circuitry 202, the communication interface 206 or the like for providing a machine learning model. In some examples, the machine learning model may be a machine learning model corresponding with a target networking function specified in the received benchmarking data request.

At block 512, subsequent to determining that the UE 102 has a required machine learning model at block 508 or providing the machine learning model at block 510, the network node 106 includes means, such as the processing circuitry 202, the communication interface 206 or the like for generating benchmarking data based at least in part on the machine learning model and the user equipment capability data. In some examples, the benchmarking data comprises one or more sample datasets for use in conjunction with the machine learning model.

At block 514, the network node 106 includes means, such as the processing circuitry 202, the communication interface 206 or the like for sending the benchmarking data, e.g., to the UE 102 for use in conjunction with a machine learning model. In some examples, the network node 106 may send the benchmarking data and the machine learning model for operations by the UE 102. As noted above, the benchmarking data may be or comprise a sample dataset for running the machine learning model at the UE 102.

Returning to FIG. 4, at block 404, the UE 102 includes means, such as processing circuitry 212, a communication interface 216, for receiving the machine learning model and/or the benchmarking data.

Subsequent to receiving the machine learning model and/or benchmarking data, at block 406, the UE 102 includes means, such as processing circuitry 212, a communication interface 216 or the like for executing the machine learning model based at least in part on the benchmarking data. By way of example, the benchmarking data may comprise a number of raw images (e.g., 100 images) for execution in conjunction with the machine learning model. Accordingly the UE will execute/run the model utilizing the raw images provided.

Subsequent to executing the machine learning model, at block 408, the UE 102 includes means, such as processing circuitry 212, a communication interface 216 or the like for generating machine learning model performance data associated with the benchmarking data. The machine learning model performance data may comprise one or more of model accuracy data, a model inference time and energy consumption data associated with execution of the machine leaning model by the UE 102. Continuing with the example above, the machine learning model performance data may comprise the output of the model based on the raw images provided.

Subsequent to generating the machine learning model performance data, at block 410, the UE 102 includes means, such as processing circuitry 212, a communication interface 216 or the like for sending (e.g., providing, transmitting) the machine learning model performance data, e.g., to the network node 106.

Returning again to FIG. 5, at block 516, the network node 106 includes means, such as the processing circuitry 202, the communication interface 206 or the like for receiving the machine learning model performance data.

At block 518, the network node 106 includes means, such as the processing circuitry 202, the communication interface 206 or the like for performing optimization operations based at least in part on the machine learning model performance data. For example, the network node 106 may determine that the machine learning model performance data fails to satisfy one or more benchmarking data parameters associated with the benchmarking data provided to the UE 102. In some embodiments, performing optimization operations comprises retraining the machine learning model. In some embodiments, the UE 102 may provide additional training data in conjunction with the machine learning model performance data in order to facilitate retraining the machine learning model. Subsequent to retraining the machine learning model, the network node 106 may provide an updated/retrained machine learning model for execution by the UE 102. As such, the network node 106 and the UE 102 may iteratively work in tandem in order to train a machine learning model for use by the UE 102 by testing operational parameters of a retrained machine learning model to determine whether it satisfies one or more target parameters specified in the benchmarking data and/or target application. In some embodiments, the network node 106 may determine (e.g., even after a plurality of iterations where the machine learning model has been updated, retrained and executed) that the updated machine learning model fails to satisfy the one or more target parameters specified in the benchmarking data and/or target application. By way of example, the network node 106 may determine that at least one of model accuracy data, a model inference time and energy consumption data fail to satisfy target parameters.

For instance, if a target model accuracy parameter for a machine learning model is 90% and the machine learning model accuracy data provided in the machine learning model performance data generated by the UE 102 is below 90% (e.g., 84%), then the network node 106 may determine that the machine learning model fails to satisfy the target model accuracy parameter. If a target model accuracy parameter for a machine learning model is 90% and the machine learning model accuracy data provided in the machine learning model performance data generated by the UE 102 is equal to or above 90% (e.g., 92%), then the network node 106 may determine that the machine learning model satisfies the target model accuracy parameter.

As described above, a method, apparatus and computer program product for providing and evaluating machine leaning models are provided. In this regard, the method, apparatus and computer program product are configured to provide a machine learning model and/or benchmarking data to a user equipment for execution. The benchmarking data is generated based at least in part on user equipment capability data associated with the UE 102. Utilizing an iterative process, the machine learning model is optimized (e.g., tuned and/or retrained) based at least in part on UE machine learning performance data. By providing for improved machine learning optimization operations, the performance of machine learning models can be evaluated and enhanced in a more efficient manner.

FIG. 4 and FIG. 5 illustrate flowcharts depicting a method according to an example embodiment of the present disclosure. However, it will be understood that each block of the flowcharts and combination of blocks in the flowcharts may be implemented by various means, such as hardware, firmware, processor, circuitry, and/or other communication devices associated with execution of software including one or more computer program instructions. For example, one or more of the procedures described above may be embodied by computer program instructions. In this regard, the computer program instructions which embody the procedures described above may be stored by a memory device 204 of an apparatus employing an embodiment of the present disclosure and executed by a processing circuitry 202 and a memory 214 of a UE employing an embodiment of the present disclosure and executed by processing circuitry 212. As will be appreciated, any such computer program instructions may be loaded onto a computer or other programmable apparatus (for example, hardware) to produce a machine, such that the resulting computer or other programmable apparatus implements the functions specified in the flowchart blocks. These computer program instructions may also be stored in a computer-readable memory that may direct a computer or other programmable apparatus to function in a particular manner, such that the instructions stored in the computer-readable memory produce an article of manufacture the execution of which implements the function specified in the flowchart blocks. The computer program instructions may also be loaded onto a computer or other programmable apparatus to cause a series of operations to be performed on the computer or other programmable apparatus to produce a computerimplemented process such that the instructions which execute on the computer or other programmable apparatus provide operations for implementing the functions specified in the flowchart blocks.

Accordingly, blocks of the flowcharts support combinations of means for performing the specified functions and combinations of operations for performing the specified functions for performing the specified functions. It will also be understood that one or more blocks of the flowcharts, and combinations of blocks in the flowcharts, can be implemented by special purpose hardware-based computer systems which perform the specified functions, or combinations of special purpose hardware and computer instructions.

A method, apparatus and computer program product are therefore provided in accordance with example embodiments for providing and evaluating machine leaning models.

In a first example embodiment, an apparatus is provided comprising at least one processor and at least one memory including computer program code with the at least one memory and the computer program code configured to, with the at least one processor, cause the apparatus to:
responsive to receiving a benchmarking data request, identify user equipment capability data associated with the benchmarking data request;
identify a machine learning model associated with the benchmarking data request;
generate benchmarking data based at least in part on the machine learning model and the user equipment capability data;
provide the benchmarking data for use in conjunction with the machine learning model.

The at least one memory and the computer program code are also configured to, with the at least one processor, cause the apparatus to receive machine learning model performance data and, in an instance in which the machine learning model performance data fails to satisfy one or more benchmarking data parameters, perform one or more optimization operations with respect to the machine learning model.

In this example embodiment, the at least one memory and the computer program code are also configured to, with the at least one processor, cause the apparatus to provide an updated machine learning model for execution.

In this example embodiment, the at least one memory and the computer program code are also configured to, with the at least one processor, cause the apparatus to retrain the machine learning model based at least in part on training data provided in conjunction with the machine learning model performance data.

In this example embodiment, the user equipment capability data is stored by an Application Management Function (AMF) or a Unified Data Management (UDM).

In this example embodiment, a Network Data Analytics Function (NWDAF) retrieves the user equipment capability data for selecting or optimizing the machine learning model.

In this example embodiment, the user equipment capability data comprises at least one of hardware properties, software properties, sensor information or a target application.

In this example embodiment, the machine learning model performance data is generated by at least one user equipment subsequent to executing the machine learning model based at least in part on the benchmarking data.

In this example embodiment, the machine learning model performance data is associated with a target function, and the target function comprises at least one of model accuracy data, a model inference time or energy consumption data.

In this example embodiment, the machine learning model performance data further comprises a subset of the benchmarking data marked by a user equipment.

In a second example embodiment, an apparatus is provided that comprises:
means for, responsive to receiving a benchmarking data request, identifying a machine learning model associated with the benchmarking data request;
means for identifying user equipment capability data associated with the benchmarking data request;
means for determining benchmarking data based at least in part on the machine learning model and the user equipment capability data; and
means for providing the benchmarking data for use in conjunction with the machine learning model.

In an example embodiment, the apparatus comprises means for receiving machine learning model performance data and, in an instance in which the machine learning model performance data fails to satisfy one or more benchmarking data parameters, performing one or more optimization operations with respect to the machine learning model.

In this example embodiment, the apparatus further comprises means for providing an updated machine learning model for execution.

In this example embodiment, the one or more optimization operations comprise retraining the machine learning model.

In this example embodiment, the apparatus further comprises means for retraining the machine learning model based at least in part on training data provided in conjunction with the machine learning model performance data.

In this example embodiment, the machine learning model performance data is generated by at least one user equipment subsequent to executing the machine learning model based at least in part on the benchmarking data.

In this example embodiment, the machine learning model performance data is associated with a target function, and the target function comprises at least one of model accuracy data, a model inference time and energy consumption data.

In this example embodiment, the machine learning model performance data comprises a subset of the benchmarking data marked by a user equipment.

In this example embodiment, the user equipment capability data is stored by an AMF or UDM.

In this example embodiment, an NWDAF retrieves the user equipment capability data for selecting or optimizing the machine learning model.

In this example embodiment, the user equipment capability data comprises at least one of hardware properties, software properties, sensor information or a target application.

In the preceding example embodiments, the means comprises at least one processor; and at least one memory including computer program code, the at least one memory and computer program code configured to, with the at least one processor, cause the performance of the apparatus.

In a third example embodiment, a method is provided that comprises:
responsive to receiving a benchmarking data request, identifying a machine learning model associated with the benchmarking data request;
identifying user equipment capability data associated with the benchmarking data request; determining benchmarking data based at least in part on the machine learning model and the user equipment capability data; and
providing the benchmarking data for use in conjunction with the machine learning model.

In an example embodiment, the method may also comprise receiving machine learning model performance data and, in an instance in which the machine learning model performance data fails to satisfy one or more benchmarking data parameters, performing one or more optimization operations with respect to the machine learning model.

In an example embodiment, the method may also comprise providing an updated machine learning model for execution.

In an example embodiment, the method may also comprise retraining the machine learning model based at least in part on training data provided in conjunction with the machine learning model performance data.

In this example embodiment, the machine learning model performance data comprises a subset of the benchmarking data marked by a user equipment.

In this example embodiment, the user equipment capability data comprises at least one of hardware properties, software properties, sensor information or a target application.

In this example embodiment, the machine learning model performance data is generated by at least one user equipment subsequent to executing the machine learning model based at least in part on the benchmarking data.

In this example embodiment, the machine learning model performance data is associated with a target function, and the target function comprises at least one of model accuracy data, a model inference time or energy consumption data.

In a fourth example embodiment, a computer program product is provided comprising at least one computer readable non-transitory memory having program code instructions stored thereon, the program code instructions which when executed by an apparatus cause the apparatus to at least:
responsive to receiving a benchmarking data request, identify a machine learning model associated with the benchmarking data request;
identify user equipment capability data associated with the benchmarking data request;
determine benchmarking data based at least in part on the machine learning model and the user equipment capability data; and
provide the benchmarking data for use in conjunction with the machine learning model.

In an example embodiment, the computer executable program code instructions also comprise program code instructions configured, upon execution, to receive machine learning model performance data and, in an instance in which the machine learning model performance data fails to satisfy one or more benchmarking data parameters, perform one or more optimization operations with respect to the machine learning model.

In an example embodiment, the computer executable program code instructions also comprise program code instructions configured, upon execution, to provide an updated machine learning model for execution.

In an example embodiment, the computer executable program code instructions also comprise program code instructions configured, upon execution, to retrain the machine learning model based at least in part on training data provided in conjunction with the machine learning model performance data.

In this example embodiment, the user equipment capability data comprises at least one of hardware properties, software properties, sensor information or a target application.

In this example embodiment, the machine learning model performance data is generated by at least one user equipment subsequent to executing the machine learning model based at least in part on the benchmarking data.

In this example embodiment, the machine learning model performance data is associated with a target function, and the target function comprises at least one of model accuracy data, a model inference time or energy consumption data.

In this example embodiment, the machine learning model performance data comprises a subset of the benchmarking data marked by a user equipment.

In a fifth example embodiment, an apparatus is provided comprising at least one processor, and at least one memory including computer program code configured to, with the at least one processor, cause the apparatus at least to:
cause transmission, via a non-access stratum (NAS) signal, of a benchmarking data request comprising user equipment capability data;
cause the apparatus at least to receive benchmarking data for use in conjunction with a machine learning model;
cause the apparatus at least to execute the machine learning model based at least in part on the benchmarking data;
generate machine learning model performance data; and
provide a report of the machine learning model performance data.

In this example embodiment, the at least one memory and the computer program code may also be configured to, with the at least one processor, cause the apparatus to receive the machine learning model in conjunction with the benchmarking data.

In this example embodiment, the machine learning model is provided by a network node comprising one or more of a NWDAF, a Management Data Analytics Service (MDAS) or other network function.

In this example embodiment, the at least one memory and the computer program code may also be configured to, with the at least one processor, cause the apparatus to receive an updated machine learning model for execution.

In this example embodiment, the updated machine learning model is updated based at least in part on the machine learning model performance data.

In this example embodiment, the user equipment capability data comprises at least one of hardware properties, software properties, sensor information or a target application.

In this example embodiment, the machine learning model performance data is associated with a target function, and the target function comprises at least one of model accuracy data, a model inference time or energy consumption data.

In this example embodiment, the at least one memory and the computer program code may also be configured to, with the at least one processor, cause the apparatus to mark a subset of the benchmarking data for sending in conjunction with the report.

In a sixth example embodiment, a method is provided that comprises:
causing transmission, via a non-access stratum (NAS) signal, of a benchmarking data request comprising user equipment capability data;
receiving benchmarking data for use in conjunction with a machine learning model;
executing the machine learning model based at least in part on the benchmarking data;
generating machine learning model performance data; and
providing a report of the machine learning model performance data.

In this example embodiment, the method also comprises receiving the machine learning model in conjunction with the benchmarking data.

In this example embodiment, the machine learning model is provided by a network node comprising one or more of a NWDAF, a Management Data Analytics Service (MDAS) or other network function.

In this example embodiment, the method also comprises receiving an updated machine learning model for execution.

In this example embodiment, the updated machine learning model is updated based at least in part on the machine learning model performance data.

In this example embodiment, the user equipment capability data comprises at least one of hardware properties, software properties, sensor information or a target application.

In this example embodiment, the machine learning model performance data is associated with a target function, and the target function comprises at least one of model accuracy data, a model inference time or energy consumption data.

In this example embodiment, the method also comprises marking a subset of the benchmarking data for sending in conjunction with the report.

In a seventh example embodiment, an apparatus is provided comprising:
means for causing transmission, via a non-access stratum (NAS) signal, of a benchmarking data request comprising user equipment capability data;
means for receiving benchmarking data for use in conjunction with a machine learning model; means for executing the machine learning model based at least in part on the benchmarking data;
means for generating machine learning model performance data; and
means for providing a report of the machine learning model performance data.

In an example embodiment, the apparatus further comprises means for receiving the machine learning model in conjunction with the benchmarking data.

In this example embodiment, the machine learning model is provided by a network node comprising one or more of a NWDAF, a Management Data Analytics Service (MDAS) or other network function.

In an example embodiment, the apparatus further comprises means for receiving an updated machine learning model for execution.

In this example embodiment, the updated machine learning model is updated based at least in part on the machine learning model performance data.

In this example embodiment, the user equipment capability data comprises at least one of hardware properties, software properties, sensor information or a target application.

In this example embodiment, the machine learning model performance data is associated with a target function, and the target function comprises at least one of model accuracy data, a model inference time or energy consumption data.

In an example embodiment, the apparatus further comprises means for marking a subset of the benchmarking data for sending in conjunction with the report.

In an eighth example embodiment, a computer program product is provided comprising at least one computer readable non-transitory memory having program code instructions stored thereon, the program code instructions which when executed by an apparatus cause the apparatus to at least:
cause transmission, via a non-access stratum (NAS) signal, of a benchmarking data request comprising user equipment capability data;
receive benchmarking data for use in conjunction with a machine learning model;
execute the machine learning model based at least in part on the benchmarking data;
generate machine learning model performance data; and
provide a report of the machine learning model performance data.

In an example embodiment, the computer executable program code instructions also comprise program code instructions configured, upon execution, to receive the machine learning model in conjunction with the benchmarking data.

In this example embodiment, the machine learning model is provided by a network node comprising one or more of a NWDAF, a Management Data Analytics Service (MDAS) or other network function.

In an example embodiment, the computer executable program code instructions also comprise program code instructions configured, upon execution, to receive an updated machine learning model for execution.

In this example embodiment, the updated machine learning model is updated based at least in part on the machine learning model performance data.

In this example embodiment, the user equipment capability data comprises at least one of hardware properties, software properties, sensor information or a target application.

In this example embodiment, the machine learning model performance data is associated with a target function, and the target function comprises at least one of model accuracy data, a model inference time or energy consumption data.

In an example embodiment, the computer executable program code instructions also comprise program code instructions configured, upon execution, to mark a subset of the benchmarking data for sending in conjunction with the report.

Many modifications and other embodiments of the inventions set forth herein will come to mind to one skilled in the art to which these inventions pertain having the benefit of the teachings presented in the foregoing descriptions and the associated drawings. Therefore, it is to be understood that the inventions are not to be limited to the specific embodiments disclosed and that modifications and other embodiments are intended to be included within the scope of the appended claims. Utilizing the techniques described above, real-time evaluation of a machine learning model performance at a UE is provided. Additionally, the optimal machine learning model for a particular target task/function can be provided to a UE upon request. Moreover, the network can obtain information about UE specific hardware capabilities for particular tasks and compare the performance of different UEs against one another. Further, the network will be able to track the performance of the fine-tuned model at the UE based on the benchmarking dataset. The above-noted techniques also address security and privacy concerns as the UEs do not need to share real data with the network.

Although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. An apparatus comprising:
means for, responsive to receiving a benchmarking data request, identifying a machine learning model associated with the benchmarking data request;
means for identifying user equipment capability data associated with the benchmarking data request;
means for determining benchmarking data based at least in part on the machine learning model and the user equipment capability data; and
means for providing the benchmarking data for use in conjunction with the machine learning model.

2. The apparatus of claim 1 comprising:
means for receiving machine learning model performance data; and
means for, in an instance in which the machine learning model performance data fails to satisfy one or more benchmarking data parameters, performing one or more optimization operations with respect to the machine learning model.

3. The apparatus of claim 1 or 2, comprising:
means for retraining the machine learning model based at least in part on training data provided in conjunction with the machine learning model performance data.

4. The apparatus of claim 2, wherein the machine learning model performance data is associated with a target function, and the target function comprises at least one of model accuracy data, a model inference time and energy consumption data.

5. The apparatus of claim 2, wherein the machine learning model performance data comprises a subset of the benchmarking data marked by a user equipment.

6. The apparatus of any of claims 1 to 5, wherein the user equipment capability data comprises at least one of hardware properties, software properties, sensor information or a target application.

7. The apparatus of any of claims 1 to 6, wherein the means comprises:
at least one processor; and
at least one memory including computer program code, the at least one memory and computer program code configured to, with the at least one processor, cause the performance of the apparatus.

8. A method comprising:
responsive to receiving a benchmarking data request, identifying a machine learning model associated with the benchmarking data request;
identifying user equipment capability data associated with the benchmarking data request;
determining benchmarking data based at least in part on the machine learning model and the user equipment capability data; and
providing the benchmarking data for use in conjunction with the machine learning model.

9. An apparatus comprising:
means for causing transmission, via a non-access stratum (NAS) signal, of a benchmarking data request comprising user equipment capability data;
means for receiving benchmarking data for use in conjunction with a machine learning model;
means for executing the machine learning model based at least in part on the benchmarking data;
means for generating machine learning model performance data; and
means for providing a report of the machine learning model performance data.

10. The apparatus of claim 9, further comprising means for receiving the machine learning model in conjunction with the benchmarking data.

11. The apparatus of claim 9 or 10, further comprising means for receiving an updated machine learning model for execution.

12. The apparatus of any of claims 9 to 11, wherein the user equipment capability data comprises at least one of hardware properties, software properties, sensor information or a target application.

13. The apparatus of any of claims 9 to 12, wherein the machine learning model performance data is associated with a target function, and the target function comprises at least one of model accuracy data, a model inference time or energy consumption data.

14. The apparatus of any of claims 9 to 13, further comprising means for marking a subset of the benchmarking data for sending in conjunction with the report.

15. A method comprising:
causing transmission, via a non-access stratum (NAS) signal, of a benchmarking data request comprising user equipment capability data;
receiving benchmarking data for use in conjunction with a machine learning model;
executing the machine learning model based at least in part on the benchmarking data; generating machine learning model performance data; and
providing a report of the machine learning model performance data.
